# EUROPEAN PATENT SPECIFICATION

(11) **EP 0 488 469 B1**
(45) Date of publication and mention of the grant of the patent: **12.06.1996**
(21) Application number: 91203077.2
(22) Date of filing: 25.11.1991
(51) Int. Cl.: H04B 10/145

(54) **Optical transmission system for transmitting analog signals**
Optisches Übertragungssystem für Analogsignalübertragung
Système de transmission optique pour la transmission de signaux analogiques

(30) Priority: 28.11.1990 NL 9002596
(43) Date of publication of application: 03.06.1992
(73) Proprietor: Koninklijke PTT Nederland N.V., NL-2509 CH The Hague (NL)
(72) Inventor: Tan, Han Hiong, NL-2651 VD Berkel en Rodenrijs (NL)

(56) References cited:
- GB-A- 2 150 383
- GB-A- 2 197 747
- PATENT ABSTRACTS OF JAPAN vol. 6, no. 185 (E-132)(1063) 21 September 1982 & JP-A-57 099 834
- PATENT ABSTRACTS OF JAPAN vol. 10, no. 137 (E-405)(2194) 21 May 1986 & JP-A-61 002 437
- PATENT ABSTRACTS OF JAPAN vol. 5, no. 205 (E-88)(877) 25 December 1981 & JP-A-56 125 125
- PATENT ABSTRACTS OF JAPAN vol. 10, no. 91 (E-394)(2148) 9 April 1986 & JP-A-60 235 544
- PATENT ABSTRACTS OF JAPAN vol. 8, no. 107 (E-245)19 May 1984 & JP-A-59 022 456
- Data Sheets for Optical Modulator types Y-35-5600-02 and Y-35-5370-02, GEC Advanced Optical Products, Great Baddow (UK), March 1990.

## Description

### A. BACKGROUND OF THE INVENTION

The invention relates to an optical transmission system, comprising means for transmitting an optical signal modulated with a modulation signal via an optical transmission medium.

Such optical transmission systems are generally known. The optical (laser) signal can be either internally or externally modulated. Internal modulation is only feasible in the case of lasers in which the magnitude of the optical output signal is dependent on the magnitude of the (electrical) laser current, as is the case in laser diodes. In the case of internal modulation, the intensity of the optical output signal is therefore modulated by means of current variation (control). In the case of external modulation, the intensity of the laser signal is itself constant, but its intensity is varied with the aid of an external modulator. This latter method of modulation is primarily of importance in applications in which a fairly large laser power is required and for that reason internally modulable laser diodes cannot be used. However, external modulation does result in distortion of the signal (by, in particular, odd harmonics) as a consequence of nonlinearity of the current modulators which are available (in particular, Mach-Zehnder modulators).

Mach- Zehnder modulators are, for example, manufactured by GEC Advanced Optical Products, Great Baddow UK

Regardless of which modulation technique is used, lasers always produce a certain noise signal (referred to in fact as Relative Intensity Noise: RIN). In digital systems, said noise is generally not a great problem. However, in systems in which analog optical signals have to be transmitted, such as, for example, in the distribution of (analog) television signals via optical local networks, the laser noise does present a problem. In that type of application, it is desirable to be able to make use of relatively cheap lasers which, however, generate a fair amount of noise, as a result of which the distance to be spanned is limited.

### B. SUMMARY OF THE INVENTION

The object of the invention is to solve the problem outlined by providing an optical transmission system in which the signal is modulated externally by an (analog) modulation signal and in which the noise generated by the laser is filtered out prior to the modulation, at least in the frequency range of the modulation signal. Preferably, the filtering is done by means of a low-pass filter whose highest pass frequency is below the lowest frequency of the modulation signal. The low-pass filter used may preeminently be a section of narrow-band optical fibre, such as a "step-index multimode" fibre.

According to a further development of the invention, the (odd) higher harmonics introduced by the external (Mach-Zehnder ) modulator can be compensated for by converting the modulation signal, before it is presented to the modulator, into a signal which is composed of the original modulation signal to which there have been added those harmonics of said modulation signal which are known to be introduced by the modulator, but with a phase which is opposite to the phase of the harmonics introduced in the modulator. In this way, the harmonics to be generated by the modulator are therefore already compensated for beforehand, as a result of which the output signal of the modulator is in fact free of said harmonics. For example, this compensation can be performed by means of a parallel circuit of two amplifiers, a first having a linear gain curve and a gain factor of +2 and a second having a nonlinear gain curve - as a result of which harmonics are generated - and a gain factor of -1. The result of this is a signal which is composed of the original modulation signal augmented by the harmonics in phase opposition. In its totality, this parallel circuit of amplifiers therefore results in a gain characteristic which forms a compensation for the effect of the nonlinear modulation characteristic of the modulator. As an alternative, the conversion mentioned -for compensating for the nonlinearity of the modulator -can be achieved by means of only one amplifier having a nonlinear gain curve and a gain factor of -1 to which a high-pass filter is connected in series. The original modulation signal is fed via a "bypass" to the modulator, while the nonlinear amplifier generates the harmonics of said modulation signal and delivers them in phase opposition to the modulator via the high-pass filter. The harmonics mentioned above are in practice, in particular, the odd harmonics.

### C. REFERENCES

Data sheets for Mach- Zehnder modulator types Y-35-5600-02 and Y-35-5 370-02, GEC Advanced Optical Products, Great Baddow (UK), March 1990.

### D. EXEMPLARY EMBODIMENTS

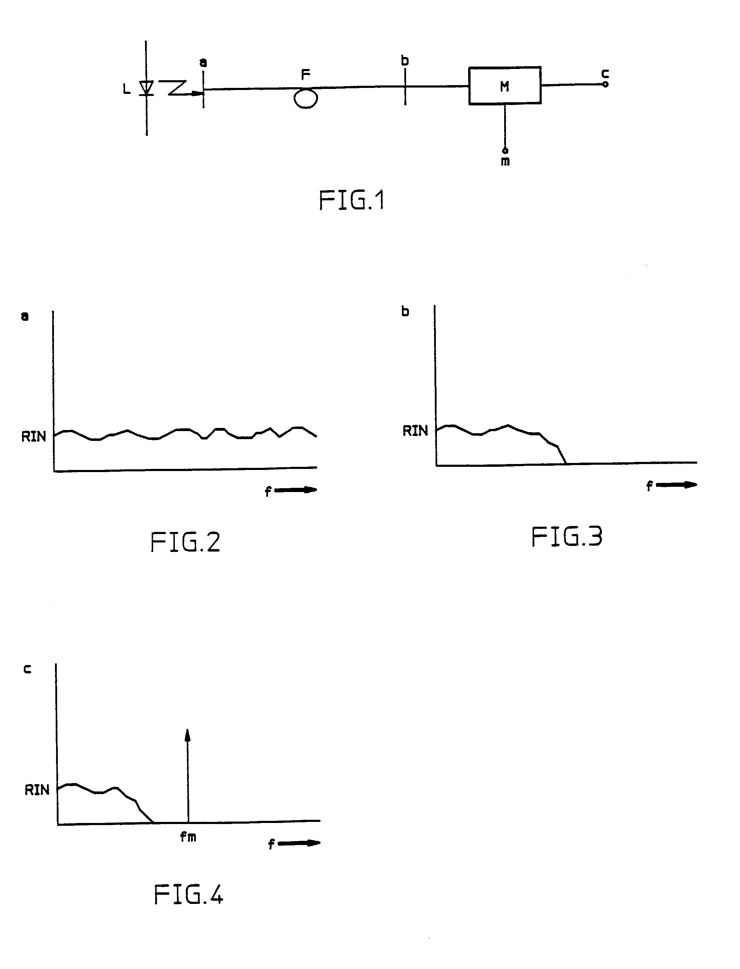

Figure 1 shows an exemplary embodiment of the invention, comprising a laser L, for example a YAG laser or a laser diode. Apart from the noise, the optical output power of said laser L is constant. The optical laser signal is modulated with a modulation signal m by means of an external Mach-Zehnder modulator M. Prior to the modulation, the noise generated in the laser L is largely filtered out by means of a low-pass filter in the form of a section (rolled up, a few kilometres long) of "step-index multimode" optical fibre F. This type of optical fibre cannot be used as a transmission medium in broadband transmission systems but is consequently a readily usable and relatively cheap component, in particular, in the present application of a low-pass filter.

Figure 2 shows the noise signal (Relative Intensity Noise: RIN) of the laser L as a function of the laser frequency f at the laser output (a in Figure 1).

Figure 3 shows the RIN as a function of f at the output (b in Figure 1) of the low-pass filter F. The longer the 'filter fibre' F is, the lower is the maximum pass frequency of the filter F.

Figure 4 shows the RIN as a function of f, but at the output (c in Figure 1) of the modulator M. In said figure fm denotes the frequency of the modulation signal m applied to the modulator M. By giving the 'filter fibre' F a length such that the maximum pass frequency is below fm, the result is achieved that the modulation signal m modulates a noise-free laser signal, which is especially important, as indicated above, in the case of analog modulation signals.

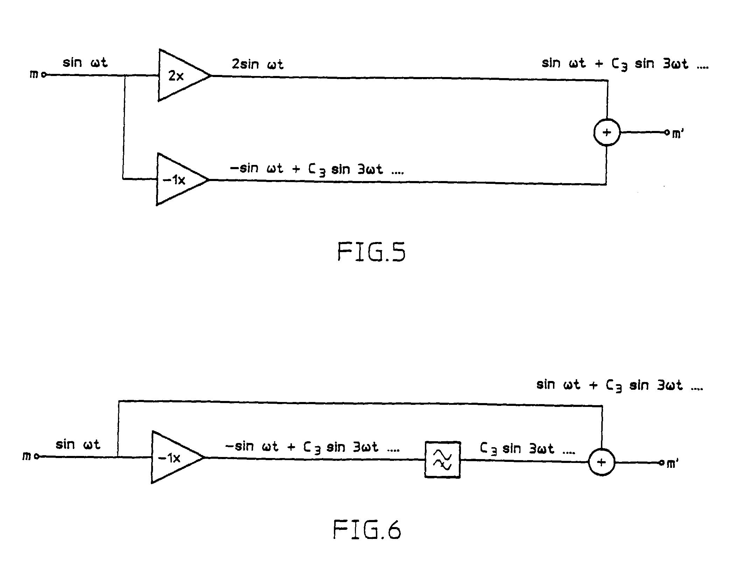

Since the modulators hitherto available, of which the Mach-Zehnder modulator is the most used type, have the problem that they generate (in particular, odd) harmonics of the modulation signal in their output signal (modulated signal), the elimination of said problem is provided by converting the modulation signal m by means of the circuit from Figure 5 or the circuit from Figure 6.

Figure 5 shows a circuit which converts the modulation signal m into a modulation signal m'. Said converted modulation signal m' is composed of the modulation signal m which is applied to the circuit and to which there are added the harmonics of said modulation signal m which are generated by the modulator M (Figure 1) but with opposite sign. The converted modulation signal m' is applied to the modulator M, as a result of which the optical signal originating from the laser L (Figure 1) is modulated with said converted modulation signal m'. The harmonics introduced by the modulator M and the harmonics generated by the conversion circuit are each in phase opposition with respect to each other, with the result that they cancel each other. The modulated signal c (Figure 1) is therefore in effect free of harmonics.

The conversion circuit of Figure 5 is formed by a parallel circuit of two amplifiers, i.e. the upper amplifier in the figure, which is free of distortion and has a gain factor of 2, and the lower amplifier in the figure, which distorts the applied modulation signal m with its odd (third, fifth, seventh, ...) harmonics and which has a gain factor of -1. The output signals of the two amplifiers are combined to form a converted modulation signal m' composed of the original modulation signal m (sin wt), augmented by its odd harmonics (C3 sin 3wt - C5 sin 5wt + C7 sin 7wt - ...). The modulation signal m' converted in this way (sin wt + C3 sin 3wt - C5 sin 5wt + C7 sin 7wt - ...) is applied to the modulator M in which the laser signal b (Figure 1) is modulated with said converted modulation signal m'. As a result of the occurrence in the modulator M of the odd harmonics -C'3 sin 3wt + C'5 sin 5wt - C'7 sin 7wt + ..., where C'3, C'5, C'7, ... are, compared with C3, C5, C7, ... equal in magnitude but reversed in sign, the modulated signal at the output of the modulator M is exclusively an image of the original modulation signal m (sin wt). In other words, the (undesirable) distortion introduced by the modulator M is compensated for by the distortion (deliberately) introduced in the lower amplifier in the figure.

The conversion circuit of Figure 6 is formed by a series circuit of a signal-distorting amplifier having a gain factor of -1 which inverts the applied modulation signal m and, in addition, adds its odd harmonics (C3 sin 3wt - C5 sin 5wt + C7 sin 7wt - ...) thereto. The (inverted) modulation signal m is filtered out of the output signal of the amplifier in a high-pass filter with a lowest pass frequency which is higher than the (highest) frequency of the modulation signal but lower than the (lowest) frequency of the third and subsequent harmonics, with the result that only the third and higher harmonics of the modulation signal m result at the output of said filter. The modulation signal is combined with the output signal of the filter by means of a "by-pass". The resultant modulation signal m' converted in this way is composed of the original modulation signal m, plus the third and higher harmonics (sin wt + C3 sin 3wt - C5 sin 5wt + C7 sin 7wt - ...) transmitted by the filter. Just as in the circuit discussed above, said converted modulation signal m' is applied to the modulator M and the optical signal b is modulated therewith, in which process the harmonics produced in the modulator M are compensated for by the harmonics generated in phase opposition in the conversion circuit.

## Claims

1. Optical transmission system, comprising a laser (L) for generating and delivering at its output an unmodulated optical signal (a), as well as a modulator (M) for modulating, with a modulation signal (m), at least part of the optical signal delivered by the laser, and, moreover, comprising means for transmitting the optical signal thus modulated via an optical transmission medium, characterised by
an optical low-pass filter (F) connected to the output of the laser, having a cut-off frequency below the lowest frequency (fm) of said modulation signal (m),
said modulator (M) being connected to the output of the low-pass filter, thus modulating the component (b) of the optical signal delivered by the laser, transmitted by the low-pass filter, with the modulation signal.

2. Optical transmission system according to Claim 1, characterised in that said low-pass filter is formed by a section of an optical fibre (F) suitable for transmitting signals having a limited frequency band.

3. Optical transmission system according to Claim 2, characterised in that said section of optical fibre (F) is of the so-called 'step-index multimode' type.

4. Optical transmission system according to Claim 1, characterised in that said modulation signal (m) is applied to said modulator (M) via a conversion device which comprises means for converting said modulation signal into a converted modulation signal (m') which is composed of the original modulation signal (m) augmented with the harmonics of the modulation signal which correspond to the harmonics generated by the modulator but are in phase opposition thereto.

5. Optical transmission system according to Claim 4, characterised in that said conversion device is formed by a first amplifier having a nonlinear gain curve and a gain factor equal to -1, and a second amplifier having a gain curve which is in fact linear and a gain factor equal to +2, the inputs of which two amplifiers are connected to the source of said modulation signal (m) and the outputs of which two amplifiers are connected to the modulation input of said modulator (M).

6. Optical transmission system according to Claim 4, characterised in that said conversion device is formed by an amplifier having a nonlinear gain curve and a gain factor of -1, of which the input is connected to the source of said modulation signal (m), and the output is connected via a high-pass filter to the modulation input of said modulator (M), and in which the input of the amplifier is connected, in addition, to the side, remote from the amplifier, of said high-pass filter.

## Patentansprüche

1. Optisches Übertragungssystem, umfassend einen Laser (L) zum Erzeugen und Abgeben eines unmodulierten optischen Signals (a) an seinem Ausgang und einen Modulator (M) zum Modulieren mindestens eines Teils des durch den Laser abgegebenen optischen Signals mit einem Modulationssignal (m), sowie umfassend ausserdem Mittel zum Übertragen des derart modulierten optischen Signals über ein optisches Übertragungsmedium,
**gekennzeichnet durch**
ein optisches mit dem Ausgang des Lasers verbundes Tiefpassfilter (F), das eine Grenzfrequenz unterhalb der tiefsten Frequenz (fm) dieses Modulationssignals (m) aufweist, wobei
dieser Modulator (M) mit dem Ausgang des Tiefpassfilters verbunden ist und somit die Komponente (b) des vom Laser abgegebenen durch das Tiefpassfilter übertragenen optischen Signals mit dem Modulationssignal moduliert.

2. Optisches Übertragungssystem nach Anspruch 1, **dadurch gekennzeichnet,** dass dieses Tiefpassfilter durch einen Abschnitt einer optischen Faser (F) gebildet wird, die sich zum Übertragen von Signalen eignet, welche ein begrenztes Frequenzband aufweisen.

3. Optisches Übertragungssystem nach Anspruch 2, **dadurch gekennzeichnet, dass** dieser Abschnitt der optischen Faser (F) vom sogenannten "Schrittindex-Mehrfachmodus"-Typus ist.

4. Optisches Übertragungssystem nach Anspruch 1, **dadurch gekennzeichnet,** dass dieses Modulationssignal (m) auf diesen Modulator (M) angewendet wird, und zwar über eine Umwandlungsvorrichtung, die Mittel umfasst zum Umwandeln dieses Modulationssignals in ein umgewandeltes Modulationssignal (m'), das aus dem ursprünglichen Modulationssignal (m) besteht, erhöht um die Oberwellen des Modulationssignals, welche den Oberwellen entsprechen, die vom Modulator erzeugt wurden, aber eine dazu entgegengesetzte Phase aufweisen.

5. Optisches Übertragungssystem nach Anspruch 4, **dadurch gekennzeichnet, dass** diese Umwandlungsvorrichtung durch einen ersten Verstärker gebildet ist, der eine nichtlineare Verstärkungskurve und einen Verstärkungsfaktor gleich -1 aufweist, und von einem zweiten Verstärker, der eine lineare Verstärkungskurve und einen Verstärkungsfaktor gleich +2 aufweist, wobei die Eingänge dieser zwei Verstärker mit der Quelle dieses Modulationssignals (m) und die Ausgänge dieser zwei Verstärker mit dem Modulationseingang dieses Modulators (M) verbunden sind.

6. Optisches Übertragungssystem nach Anspruch 4, **dadurch gekennzeichnet, dass** diese Umwandlungsvorrichtung durch einen Verstärker gebildet ist, der eine nichtlineare Verstärkungskurve und einen Verstärkungsfaktor von -1 aufweist, dessen Eingang mit der Quelle dieses Modulationssignals (m) und dessen Ausgang über ein Hochpassfilter mit dem Modulationseingang dieses Modulators (M) verbunden ist, und wobei der Eingang des Verstärkers zusätzlich mit derjenigen Seite dieses Hochpassfilters verbunden ist, die vom Verstärker entfernt ist.

## Revendications

1. Système de transmission optique, comprenant un laser (L) pour produire et délivrer à sa sortie un signal optique non modulé (a) de même qu'un modulateur (M) pour moduler, par un signal de modulation (m), au moins une partie signal optique délivré par le laser et comprenant, de plus, un moyen pour transmettre le signal optique ainsi modulé par l'intermédiaire d'un milieu de transmission optique ; caractérisé :
par un filtre optique passe-bas (F), connecté à la sortie du laser, ayant une fréquence de coupure au-dessous de la fréquence la plus basse (fm) dudit signal de modulation (m) ; et
en ce que ledit modulateur (M) est connecté à la sortie du filtre passe-bas, en modulant ainsi, avec le signal de modulation, la composante (b) du signal optique délivré par le laser, transmise par le filtre passe-bas.

2. Système de transmission optique selon la revendication 1, caractérisé en ce que ledit filtre passe-bas est formé par une section d'une fibre optique (F) appropriée pour transmettre des signaux ayant une bande de fréquence limitée.

3. Système de transmission optique selon la revendication 2, caractérisé en ce que ladite section de fibre optique (F) est du type dit "multimode à saut d'indice".

4. Système de transmission optique selon la revendication 1, caractérisé en ce que ledit signal de modulation (m) est appliqué audit modulateur (M) par l'intermédiaire d'un dispositif de conversion qui comprend un moyen pour convertir ledit signal de modulation en un signal de modulation converti (m') qui est composé du signal de modulation d'origine (m) auquel on a ajouté les harmoniques du signal de modulation qui correspondent aux harmoniques produits par le modulateur mais qui sont en opposition de phase avec ceux-ci.

5. Système de transmission selon la revendication 4, caractérisé en ce que ledit dispositif de conversion est formé d'un premier amplificateur ayant une courbe de gain non linéaire et un facteur de gain égal à -1, et d'un second amplificateur ayant une courbe de gain qui est, en fait, linéaire et un facteur de gain égal à +2, les entrées de ces deux amplificateurs étant connectées à la source dudit signal de modulation (m) et les sorties de ces ceux amplificateurs étant connectées à l'entrée de modulation dudit modulateur (M).

6. Système de transmission selon la revendication 4, caractérisé en ce que ledit dispositif de conversion est formé d'un amplificateur ayant une courbe de gain non linéaire et un facteur de gain égal à -1, dont l'entrée est connectée à la source dudit signal de modulation (m), et dont la sortie est connectée, par l'intermédiaire d'un filtre passe-haut, à l'entrée de modulation dudit modulateur (M), et dans lequel l'entrée de l'amplificateur est connectée, de plus, au côté, éloigné de l'amplificateur, dudit filtre passe-haut.
